# EUROPEAN PATENT APPLICATION

(11) **EP 1 703 700 A1**
(43) Date of publication of application: **20.09.2006**
(21) Application number: 06100931.2
(22) Date of filing: 27.01.2006
(51) Int. Cl.: H04L 29/08, G06F 17/30

(54) **A method and system for rendering and refreshing a web portal page**

(30) Priority: 17.03.2005 EP 05102111
(71) Applicant: International Business Machines Corporation, Armonk, N.Y. 10504 (US)
(72) Inventor: Behl, Stefan, 71522 Backnang (DE); Nauerz, Andreas, 71032 Böblingen (DE); Schäck, Jürgen, 77855, Achern (DE); Schäck, Thomas, 77855 Achern (DE); Liesche, Stefan, Böblingen 71034 (DE)
(74) Representative: Klein, Hans-Jörg

(57) **Abstract**

The present invention relates to a method for differential rendering a portal page and refreshing it, which portal page comprises a plurality of page elements (10, 12, 14). Said method includes the first step of providing (20, 22) a complete portal page. Then a request for the portal page is sent and/or received (28), wherein the request reflects user events. In a next step those page elements (10, 12, 14) of the portal page to be updated are identified (30, 31) on the basis of the user events. Then a page delta is calculated (32), wherein each page element (10, 12, 14) is associated with a refresh policy depending on the semantics of the respective page element (10, 12, 14). Said page delta comprises the markup elements of the page elements to be updated. Next the page delta is transferred (34) to the existing portal page and merged (40) with the existing portal page.

## Description

### Background of the invention

### 1. Field of the invention

The present invention relates to a method for the differential rendering of portal pages on the server and refreshing them on the client. In particular the inventive method relates to the interaction between a server and a browser of a client.

### 2. Description of the related art

A conventional portal page aggregation system usually transfers the complete portal page, i.e. the complete markup, which corresponds with the visual representation of the portal page, is sent as a markup document from the server to the browser of the client. The markup includes all portlets and navigation elements.

There are two main disadvantages coming along with this approach: First the server-side processing time for rendering the page is slow as the markup of each page element has to be requested. Second it results in a high data flow between server and browser as the transferred markup document is very large.

According to an alternative conventional method, the complete page is downloaded from the server to the browser only for the first time. Subsequently the client sends separate requests for only those parts of the portal page that have changed via so-called client side includes (CSI). Accordingly the server sends the markup for each of these parts in a separate response to the browser.

However, also this approach has a major drawback: Refreshing individual page parts does not work well as the browser is not able to always determine those parts of the portal page correctly. This is because the browser does not know the portal-specific semantics of the received user events. In particular, this problem occurs, if several portlets communicate together, i.e. when a click into one portlet has an effect on another portlet.

### Object of the invention

It is an object of the present invention to provide a method for rendering a portal page on the server and refreshing it on the client, which improves the transfer between the server and the client and reduces the request processing time on the server.

### Summary of the invention

The above object is achieved by a method as laid out in the independent claims. Further advantageous embodiments of the present invention are described in the dependent claims and are taught in the description below.

The core idea of the present invention is to calculate a minimal page delta based on the user event and the current state of the portal page after the complete portal page has been initially stored. Each page element is associated with a refresh policy depending on the semantics of the respective page element. The refresh policies may be completely adapted to the semantics of the resources of the page. For example, the refresh of a portlet is only required, if said portlet was a target of an action or if said portlet has received an event of another portlet.

In particular the page delta is calculated on a server and the portal page is stored on a client. The page delta only contains markup elements of those page elements that need a refresh, typically one portlet or a small set of portlets. Accordingly only these markup elements are sent to the client. Previously several markup elements are connected to markup fragments. After receiving the page delta the client merges the contained markup fragments with the overall markup document stored on the client. In addition, the markup fragments of connected page parts are grouped to larger fragments called partitions. Thus the number of merge operations on the client can be minimized.

The inventive method has the advantage, that the overall performance of the portal application is significantly improved due to the reduced data transfer between server and client as well as the reduced request processing time on the server.

### Brief description of the drawings

The above as well as additional objectives, features and advantages of the present invention will be apparent in the following detailed written description.

The novel and inventive features believed characteristics of the invention are set forth in the appended claims. The invention itself, their preferred embodiments and advantages thereof will be best understood by reference to the following detailed description of preferred embodiments in conjunction with the accompanied drawings, wherein:
- Fig. 1: shows a schematic diagram of a structure of a typical portal page;
- Fig. 2: shows a flow chart diagram of a preferred embodiment of the inventive method after an initial request;
- Fig. 3: shows a flow chart diagram of a preferred embodiment of the inventive method after a subsequent request;
- Fig. 4: shows a data flow between a server and a client after an initial request;
- Fig. 5: shows a data flow between the server and the client after a further request;
- Fig. 6: shows a flow chart diagram of rendering a page delta on the server;
- Fig. 7: shows representations of a portal page on the server and on the client;
- Fig. 8: shows representations of a page delta on the server and on the client;
- Fig. 9: shows an example of merging a page delta with a complete page on the client;
- Fig. 10: shows a simplified architecture of a portal application;
- Fig. 11: shows an internal design of the Aggregation component of the portal application including the required extensions; and
- Fig. 12: shows a required framework implementing the inventive method.

### Detailed description of the invention

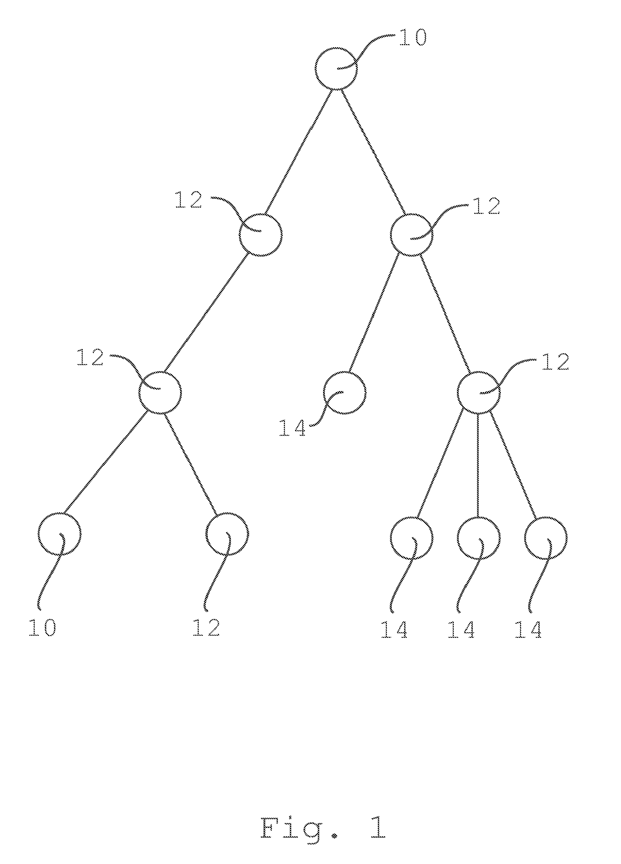

Fig. 1 shows an example for the structure of a typical portal page, which allows the application of a preferred embodiment of the inventive method. The portal page has a hierarchical structure of page elements 10, 12 and 14. In the depicted example, the portal page includes navigation elements 10, layout elements 12 and portlets 14.

In the first two levels of the tree structure the portal page consists of nested layout elements 12, e.g. horizontal panels. In a third level the portal page comprises two layout elements 12 and a portlet 14. In a forth level the portal page comprises one navigation element 10, e.g. for page navigation, one layout element 12, and three portlets 14. The page elements of one level correspond with another page element in the next lower level.

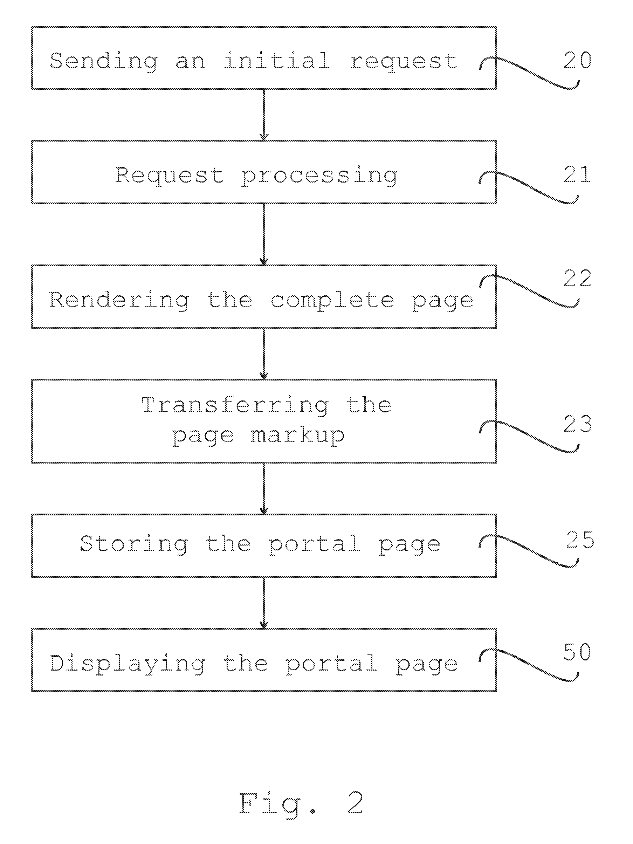

Fig. 2 shows a flow chart of a preferred embodiment of the inventive method after an initial request for the portal page. In a first step 20 the client sends the initial request for a given portal page to the server. In a further step 21 the portal application starts the request processing lifecycle. After the action phase, the state of the portal application is committed.

In a next step 22 the markup of the requested portal page is written to the response during the render phase. The rendering is performed by traversing the tree structure of the portal page in order to collect the markup of each visited page element. In addition to the rendering, the portal application creates a cookie, which contains information about the rendered page as a whole and the rendered elements making up that page.

In a step 23 the response is sent to the client. It contains the page markup, the created cookie, and a script, which implements the merge algorithm required for subsequent requests. In a step 25 the received markup document, the cookie and the merge script are stored on the client. In a final step 50 the received markup document is displayed on the client.

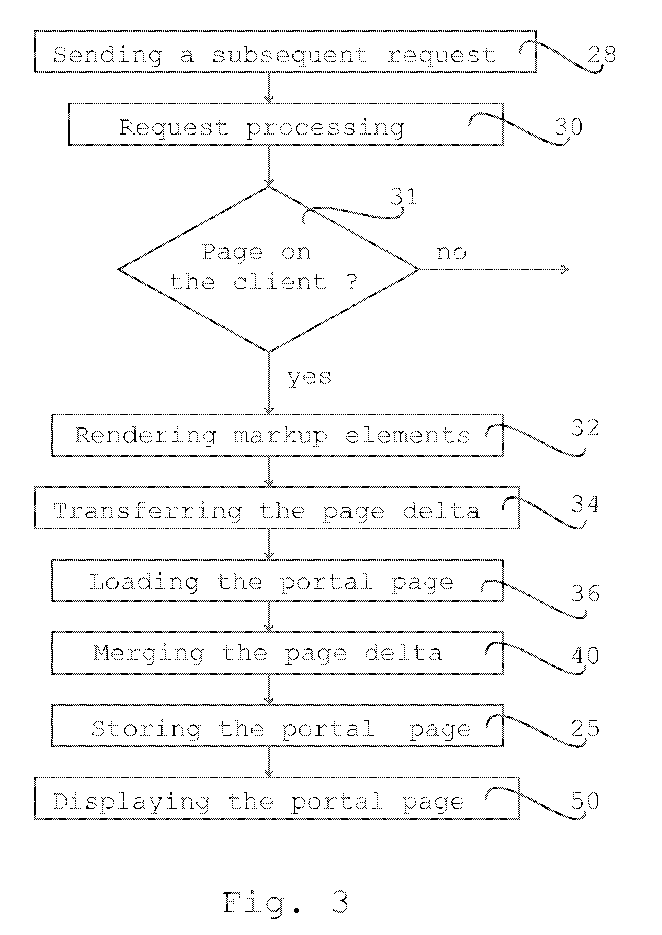

Fig. 3 shows a flow chart diagram of a preferred embodiment of the inventive method for a subsequent request. In a step 28 the request for the portal page is sent from the client to the server. The cookie received via the response of the initial request for that page is sent together with this request. The cookie indicates if a version of the portal page has been stored on the client yet.

In a next step 30 the portal application starts the request processing lifecycle beginning with the initialization phase followed by the action phase. The action phase is responsible for portlet action execution. After the action phase, the state of the portal application is committed.

In a further step 31 it is checked based on the cookie, if the requested page is already on the client. If this page is on the client, in a step 32 the render phase calculates the page delta to that page by identifying all page elements of the requested page that require a refresh. Otherwise the complete page is rendered in the same way as in the scope of the initial request.

In a step 32 only the markups for page elements are rendered, which need a refresh, i.e. only the markup of those page elements are written to the response. Finally the cookie is updated as the structure of the page might have changed.

In a step 34, after the request processing has been finished, the response is sent to the client. It contains the markup reflecting the page delta as well as the updated cookie. On the client, a script function is called within the received delta markup document, which loads the markup document representing the complete page from the store on the client.

In a step 40 the merge script function is invoked, which merges the markup document representing the page delta with the loaded document representing the complete page. The resulting markup document and the cookie are stored on the client in the step 25. In the step 50 the browser displays the resulting markup document representing the refreshed page.

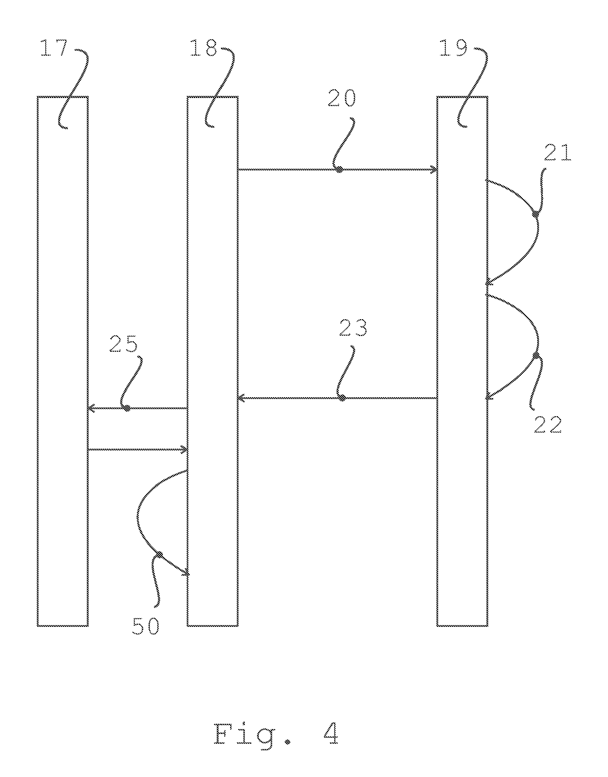

Fig. 4 shows the data flow between the server 19 and the client after the initial request. The client includes a browser 18 and a storage 17. In the step 20 the client sends the initial request for the portal page to the server 19. Then the portal application in the step 21 starts a request processing lifecycle beginning with an initialization phase followed by an action phase being responsible for portlet action execution. After the action phase, the state of the portal application is committed.

In the next step 22 the rendering is performed by traversing the tree structure of the portal page and writing the markup for each visited page element to the response. In addition to the rendering, the portal application creates a cookie, which contains information about the rendered page as well as the rendered page elements making up that page. To be more precise, the cookie contains a list of pages that have already been sent to the client as well as for each page a list of page parts whose markup fragments are included in the sent markup document of that page.

In the step 23 the response is sent to the client. It contains the page markup, the created cookie, and a script, e.g. JavaScript, which implements the merge algorithm required for subsequent requests. The script is sent as a separate file, e.g. a js-file, which may be cached by the browser 18 of the client.

In the step 25 the browser 18 stores the received markup document in the storage 17. The cookie and the merge script are stored in the cache of the browser 18. In the final step 50 the browser 18 displays the received markup document.

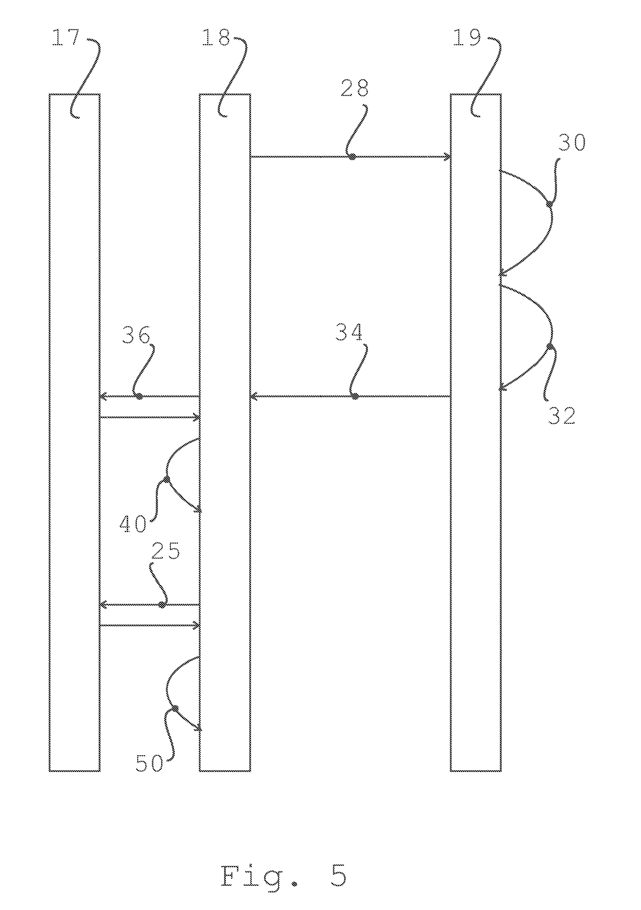

Fig. 5 shows the data flow between the server 19 and the browser 18 in the scope of subsequent requests. In the step 28 the browser 18 sends the request reflecting the user event to the server 19. The cookie received via the response of the initial request for the respective page flows along with that request.

In the step 30 the portal application starts the request processing lifecycle beginning with the initialization phase followed by the action phase. The action phase is responsible for portlet action execution. After the action phase, the state of the portal application is committed, i.e. it is now possible to distinctly identify all those elements of the requested page, which need a refresh.

In the step 31 of the render phase it is checked on the basis of the cookie, whether the requested page is already on the client. If this is not the case, the complete page is rendered in the same way as in the scope of the initial request.

If the requested page is already stored on the client, the render phase in the step 32 calculates the page delta to that page by identifying all page elements of the requested page that require a refresh. Accordingly it merely writes the markup of those page elements to the response. Finally the cookie is updated as the structure of the page might have changed. For example a page element representing a portlet might have been added to the page during the action phase.

In the step 34 the response is sent to the client. It contains the markup reflecting the page delta as well as the updated cookie. A script function called within the received markup document of the page delta loads the markup document representing the complete page from the storage 17 of the client (step 36).

In the step 40 the merge script function is invoked, which merges the received markup document of the page delta with the document of the complete page loaded in step 36. The merge algorithm replaces the stale markup fragments in the overall markup document with the markup fragments contained in the received page delta. The resulting markup document is saved in the storage 17 of the client. The cookie is stored in the cache of the browser 18 in the step 25. In the final step 50 the browser displays the resulting markup document.

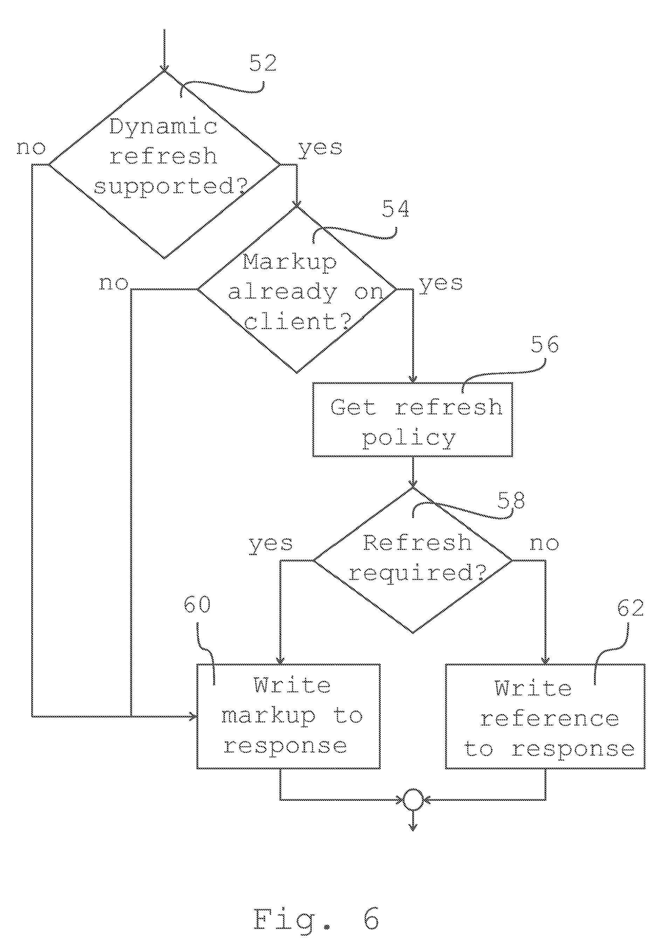

Fig. 6 shows a flow chart diagram of the server-side calculation of the page delta. The calculation of the page delta is performed during the render phase 22 of the request processing lifecycle. The rendering process of portal traverses the tree representation of the requested page and invokes the illustrated algorithm for each visited page element.

In a first step 52 the visited page element is asked whether it supports the dynamic refresh mechanism introduced in the scope of this invention or not. Note that not every type of page element must support this mechanism though it is strongly encouraged in order to maximize the benefits of the inventive method.

Assuming that dynamic refresh is supported, in a further step 54 the algorithm detects on the basis of the cookie, whether the markup of the visited page element is already on the client as a part of the stored markup document representing the entire portal page. Note that the mere existence of the overall markup document for the requested page on the client does not imply that the markup of a particular visited page element is contained in this document as the structure of the page might have changed during the action phase. For example, the current request might have caused the inclusion of an additional portlet into the page during the action phase.

If the markup of the page element is already on the client, in a next step 56 a refresh policy of this page element is requested and executed. As already mentioned, the refresh policy of a particular page element depends on the semantics of the respective page element. The refresh policy of a portlet for example might check in a step 58, whether the portlet executed an action in the scope of this request or if its markup was invalidated due to other reasons, e.g. due to a configured timeout on the server.

If a refresh is required, the page element delivers its entire markup in a step 60. If no refresh is required, in a step 62 a reference is returned, which points to the markup fragment of said page element in the markup document stored on the client.

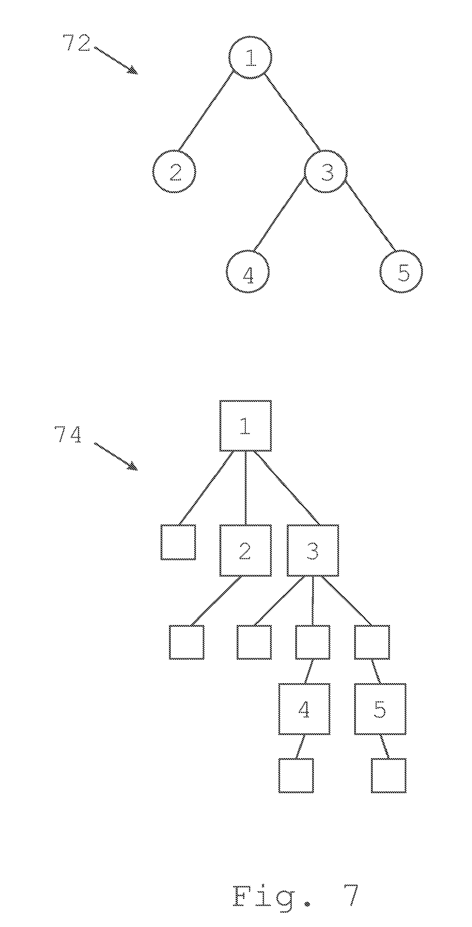

Fig. 7 shows representations of a portal page 72 on the server and of a portal page 74 on the client.

The tree of the portal page 72 on the server represents a model of the page, which abstracts from the visual representation of the page. This representation just contains those page elements, which are relevant for the request processing on the server in the portal application.

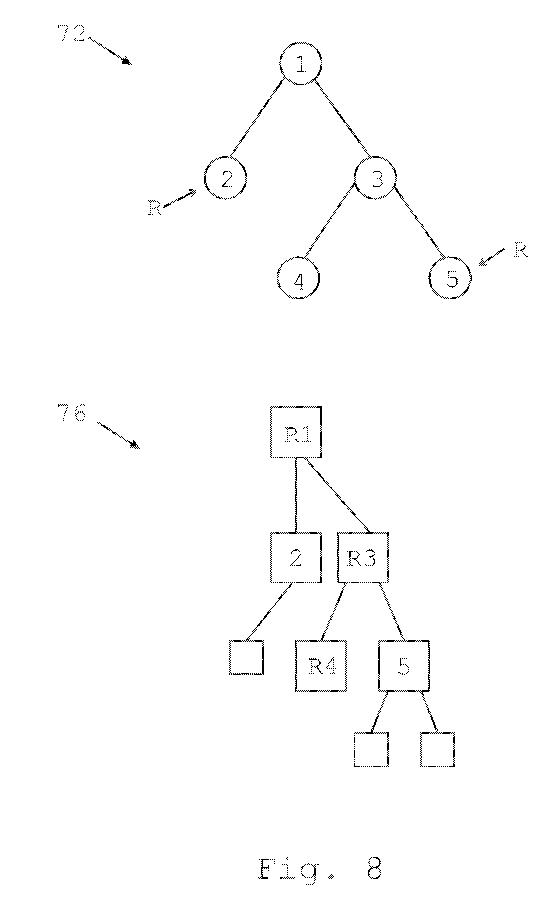

The representation of the portal page 74 on the client corresponds to a markup document, which reflects the visual representation of the portal page 72. When using a browser of a personal computer the markup document is typically a HTML document consisting of HTML tags. As the document describes a hierarchy it can also be seen as a tree, c.f. Fig. 8. The depicted sample tree might correspond to a HTML markup document with a structure shown in Table I.

The calculation of a page delta on the server that can be applied to the page, or markup document respectively, stored on the client, requires a mapping between the two illustrated representations. This may be done by assigning each page element a unique identifier in the representation on the server. In Fig. 8 these identifiers are illustrated as numbers within circles representing the server-side page elements. During rendering a page element encodes its identifier into the root tag of its markup fragment of the page, e.g. as a special tag attribute. All other tags, which are depicted as empty squares, being part of this markup fragment need not be flagged with this identifier. The identifiers in the markup document can be easily looked up by the merge script. In Fig. 8 the root tags of the various markup fragments are depicted as squares with numbers in it representing the said identifiers.

The existence of such identifiers being unique within the markup document processed on the client is therefore a prerequisite for the inventive method.

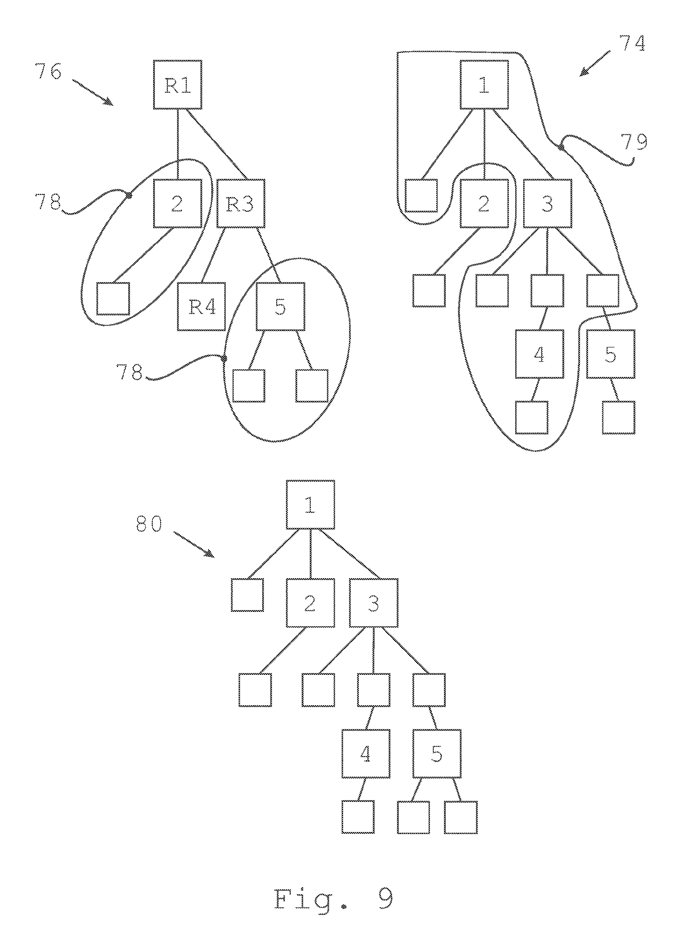

Fig. 8 shows the representation of the portal page 72 on the server 19 and a representation of a corresponding page delta 76 transferred to the client. The depicted example assumes that the page elements of the portal page 72 with the identifiers 2 and 5 are required to be refreshed. The letters R and the corresponding arrows in 72 characterize those page elements to be refreshed. The page delta 76 comprises markup fragments of those page elements needing a refresh, as well as references to unchanged markup fragments. References are custom markup tags, e.g. a ref-tag, that also contain identifiers for their resolution during the merge. In Fig. 9, references are illustrated as numbered squares prefixed with the letter "R", e.g. "R1".

The sample HTML delta markup document that corresponds with the delta tree of Fig. 9 might have a structure shown in Table II.

In the depicted sample the creation of partitions is implicit. Each sub-tree in the markup document consisting merely of nodes or tags, respectively, representing references forms a partition. The merge algorithm detects these partitions. In the provided sample the sub-tree of the page elements with the numbers R1, R3, and R4 forms a partition. The merge script on the client detects these partitions in order to minimize the merge operations. Note that also implementations are conceivable where partitions are explicitly mapped to a special tag in the markup document.

Fig. 9 shows an example of merging the page delta 76 with the complete page 74 on the client. The page delta 76, which has been transferred from the server 19 to the client, is merged with the markup document representing the respective page 74. The markup document 74 has been stored in the client-side store 17. In the example, the received page delta contains two refreshed markup fragments 78 and three references. The merge algorithm just resolves the contained references by retrieving the referenced markup fragments, or sub-trees, respectively, from the overall markup document by means of their identifiers. If the merge algorithm supports partition detection, the number of reference resolution steps can be minimized. In the depicted example, all contained references form a partition, i.e. the inclusion of the corresponding markup fragments can be done by executing one resolution step. The markup corresponding to the partition consisting of the references R1, R3, and R4 is illustrated by 79.

Note that deletions of markup fragments are implicit. Markup fragments being part of the overall markup document that are neither referenced nor refreshed are accordingly not included into the result markup document, e.g. the former page delta. The result of this merging is a refreshed portal page 80, which has to be stored in the client-side store before displaying it.

A detailed description of an implementation of the inventive method and the integration into a portal application is described below.

The following paragraphs outline a possible implementation of the inventive method on a software design level. In addition the integration into an existing architecture of a portal application is discussed.

In the following, the term "component" denotes a self-contained coarse-granular entity in a software architecture that offers its service via an interface. If a user interface component is meant, e.g. a button, a menu or a selection list, the term "user interface component" is used explicitly.

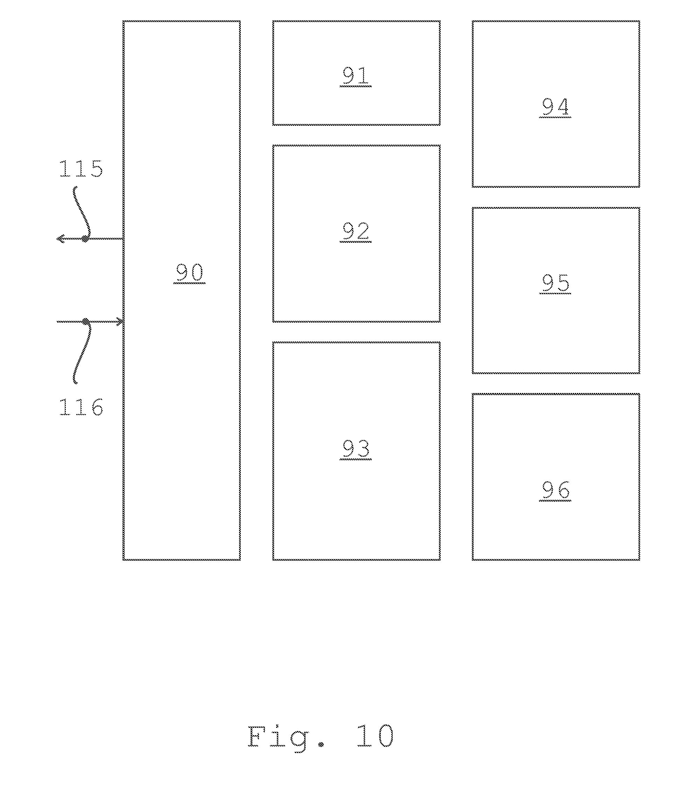

Fig. 10 shows a simplified software architecture of the web sphere portal. Typically there is a so-called front controller 90, e.g. a servlet, which receives the incoming user requests and controls their processing. The user requests are initiated by multiple clients. The front controller 90 communicates with other self-contained components via their exposed interfaces in order to fulfill specific request processing tasks. An arrow 115 represents a response. An arrow 116 represents a request. The illustrated architecture is made up of the components with the responsibilities described below.

An authentication component 91 is responsible for verifying the identity of the user. Each incoming request has to pass an authentication. The portal uses the user identity to determine the content the user is authorized to access as well as the commands to execute.

A command API (application programming interface) component 92 provides an abstraction layer for portal-specific commands. In particular it allows for executing commands via a unified interface. Commands may be used to perform administrative tasks such as creating and/or deleting portal pages, adding and/or removing portlets to and/or from portal pages, arranging portlets on existing pages and so on.

A model API component 94 provides a unified access, e.g. read and write access, to various models, e.g. layout models representing the layouts of portal pages or navigation models representing the hierarchy of portal pages. The provided layout models correspond to the server-side page representations as discussed above.

A state manager component 95 is responsible for handling a portal resource state, e.g. the portlet modes and/or window states of the portlets or the identifier of the currently selected portal page. It provides an API, which allows for reading as well as writing these state portions.

A portlet container 96 provides a unified access to the portlets. In particular it allows for gathering the markup of a certain portlet or executing a portlet action. The portlet container invokes portlets by means of the portlet API.

An aggregation component 93 is invoked during the render phase of the request processing lifecycle. The aggregation component 93 is responsible for transforming the model of the requested page into a presentation tree as well as writing the markup that corresponds to this presentation tree to the response.

The control flow during the action phase, which is not illustrated explicitly, can be outlined as follows.

First the front controller 90 retrieves the user action from the given request. After that it maps the user action or rather an identifying string to a certain command and executes it via the command API component 92 passing in a set of parameters. The subsequent control flow depends on the semantics of the respective command.

An administrative command might load a layout model via the model API component 94 and modifies this model according to the parameters passed in, for example it might add a portlet. Other kinds of commands involve the modification of a resource state via the state manager component 95 or executing a portlet action by dispatching to the portlet container component 96.

The control flow during the render phase can be outlined as follows. The front controller 90 delegates the rendering task to the aggregation component 93. First the aggregation component 93 retrieves the identifier of the requested page from the state manager component 95. Second it loads the corresponding layout model representing the requested portlet page via the model API component 94 and transforms it into a presentation tree afterwards. Depending on the implementation of the aggregation component 93 this transformation step may vary quite a lot. In an implementation based on Java server faces (JSF) for example each resource in the loaded layout model is mapped to at least one JSF user interface component. As a final step, the resulting JSF tree is traversed and the markup of each visited user interface component is written to the response.

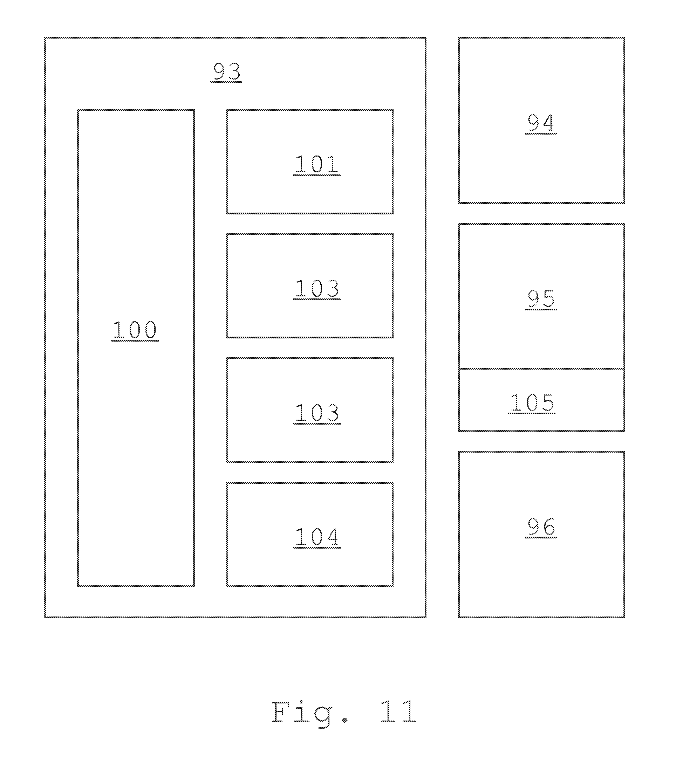

The implementation of the inventive method requires the adaptation of the aggregation component 93 as well as the state manager component 95. Fig. 11 illustrates these changes and extensions. It presupposes a JSF-based aggregation.

The main components in the JSF-based aggregation are illustrated as inner components nested in the aggregation component 93. A view handler component 100 controls the behavior in the render phase, i.e. the view handler component 100 is responsible for building the JSF component tree as well as invoking the renderers associated with the various user interface components. The renderers are responsible for writing the markup of a user interface component to the response.

The part of the user interface component tree representing the actual portal page, in addition to the navigation components, is the result of a layout model transformation. The abstraction layer modeling model transformations corresponds with a model transformer component 101. The transformer of a layout model, for example, might traverse the given layout model and map each visited layout model resource to a JSF user interface component. As this mapping step is a complex step involving the instantiation as well as the initialization of the respective user interface component, it is also encapsulated in a self-contained component, namely in a user interface mapper component 102. To sum up, the model transformer component 101 defines the transformation strategy and uses the associated user interface mapper component 102 in order to transform one particular resource.

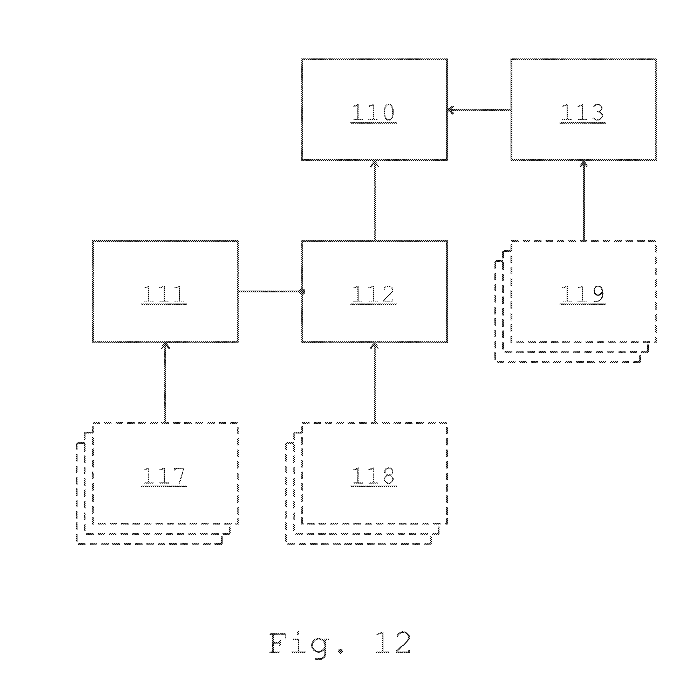

The main extension is a refresh policy model component 104, which is actually a micro-framework within the aggregation component 93. As depicted in Fig. 12, this framework basically consists of a set of interfaces and generic classes implementing these interfaces, which simplify the implementation of concrete user interface components, and renderers, which support the inventive method.

The required interfaces and classes are described below in detail. By means of a so-called refresh policy holder interface 110, user interface components indicate that they support the inventive refresh method. This interface offers a "getRefreshPolicy" method, which enables renderers to get the refresh policy associated with the respective user interface component. Note that the user interface mapper component 102 must initialize each user interface component supporting the refresh policy holder interface 110 with the needed refresh policy by means of said "setRefreshPolicy" method. As the user interface mapper component 102 is able to set generic properties of arbitrary user interface components no extensions of the user interface mapper component 102 are required to support this step.

The class of base refresh user interface components 112 is an abstract JSF user interface component, which implements the refresh policy holder interface 110. It merely reads and/or writes an instance variable representing the refresh policy. This abstract class is supposed to be extended by concrete specific user interface components 118, which support the inventive method.

Specific refresh policies 117 are modeled by means of a refresh policy interface 111. The refresh policy interface 111 provides a "RefreshRequired()" method and is to be implemented according to the semantics of the resource using this policy.

The class of base refresh renderers 113 is an abstract implementation of specific JSF renderers 119, e.g. JSF renderers, which encapsulates the refresh algorithm as illustrated by the flow diagram of Fig. 7. This base refresh renderer 113 is also supposed to be extended by concrete renderers, which merely need to provide some methods to gather their markup in case that a refresh is required.

Required state manager component extensions 105 depicted in Fig. 12 are related to the generation of a uniform resource locator (URL). In addition to providing access to the state information, the state manager component 95 is also responsible for encoding state information into the URLs in order to support browser bookmarks and back button usage. However, as the concept of the inventive method involves the client-side storing of markup, which is likely to contain the URLs, the state information encoded into the URLs must be invariant to specific user requests. This means, that the URLs may only encode the delta state portion while the base state the delta state refers to must be encoded into the delta markup document per request, i.e. the base state must not be stored on the client. However, the state manager component 95 of the web sphere portal makes use of a flexible state handling and URL generation framework, which can be easily customized to meet this requirement.

Another discussed requirement of the inventive method is the mapping between the servers-side portal page representation and the client-side markup document via identifiers. This concept may be easily put into practice when using a JSF-based aggregation as the JSF user interface model component 103 already offers the concept of a so-called client identifier.

The user interface mapper component 102, which is responsible for the user interface component initialization, sets the client identifier for each processed user interface user interface component by deriving it from the unique identifier of the transformed resource in the model, e.g. layout model. Thus, each renderer is able to encode the client identifier of the associated user interface component into the markup of the user interface component. As the client-side merge script must be able to detect these identifiers in the markup document, in the overall markup document stored on the client as well as in the received delta markup document, the encoding into the markup needs to be done in a unified way. Therefore, the encoding of the client identifier of a user interface component is also performed in the class of the base refresh renderer 113.

The present invention can also be embedded in a computer program product, which comprises all the features enabling the implementation of the methods described herein. Further, when loaded in computer system, said computer program product is able to carry out these methods.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope or spirit of the invention. All such changes and modifications are intended to be included within the scope of the invention as defined by the appended claims.

### T A B L E S

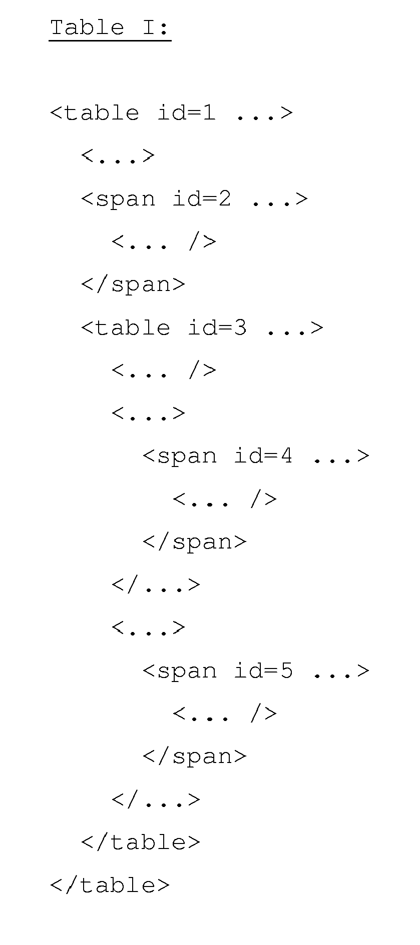

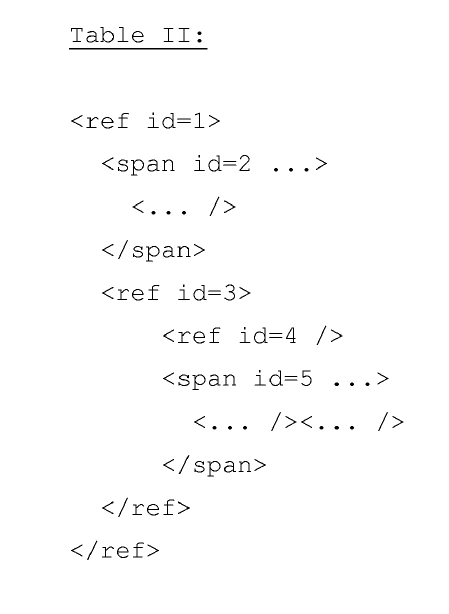

### L I S T OF R E F E R E N C E N U M E R A L S

- 10: navigation element
- 12: layout element
- 14: portlet
- 16: partition
- 17: storage
- 18: browser
- 19: server
- 20: step of sending the initial request
- 21: step of the request processing
- 22: step of rendering the complete portal page
- 23: step of transferring the complete page markup
- 25: step of storing the portal page
- 28: step of sending the subsequent request
- 30: step of the request processing
- 31: step of checking the page
- 32: step of rendering the markup elements
- 34: step of transferring the page delta
- 36: step of loading the portal page
- 40: step of merging the page delta
- 50: step of displaying the portal page
- 52: step of checking refresh
- 54: step of checking markup
- 58: step of getting policy
- 60: step of writing markup
- 62: step of writing reference
- 72: portal page on the server
- 74: portal page on the client
- 76: page delta
- 78: fragment of the page delta
- 79: actual part of the portal page
- 80: actualized portal page
- 90: front controller of the portal application
- 91: authentication component
- 92: command API component
- 93: aggregation component
- 94: model API component
- 95: state manager component
- 96: portlet container component
- 100: view handler component
- 101: model transformer component
- 102: user interface mapper component
- 103: user interface model component
- 104: refresh policy model component
- 105: state manager component extensions
- 110: refresh policy holder interface
- 111: refresh policy interface
- 112: base refresh user interface component
- 113: base refresh renderer
- 115: response
- 116: request
- 117: specific refresh policies
- 118: specific user interface components
- 119: specific renderers

## Claims

1. A method for differential rendering a portal page on a server (19) and refreshing it, which portal page comprises a plurality of page elements (10, 12, 14), wherein said method includes the steps of:
a) providing (20, 22) a complete portal page by the server (19) ;
b) receiving (28) a request for the portal page by the server (19), wherein the request reflects user events;
c) identifying (30, 31) those page elements (10, 12, 14) of the portal page to be updated on the basis of the user events;
d) calculating (32) a page delta on the server (19), which page delta corresponds with the page elements (10, 12, 14) to be updated, wherein each page element (10, 12, 14) is associated with a refresh policy depending on the semantics of the respective page element (10, 12, 14);
e) sending (34) the page delta to the existing portal page; and
f) merging (40) the page delta with the existing portal page.

2. The method of claim 1, wherein the complete portal page is provided by the steps of:
a) receiving (20) an initial request for the portal page by the server (19); and
b) sending (23) the complete portal page by the server (19).

3. A method for differential rendering a portal page and refreshing it on a client (17, 18), which portal page comprises a plurality of page elements (10, 12, 14), wherein said method includes the steps of:
a) providing (20, 22) a complete portal page on the client (17, 18);
b) sending (28) a request for the portal page by the client (17, 18), wherein the request reflects user events;
c) identifying (30, 31) those page elements (10, 12, 14) of the portal page to be updated on the basis of the user events;
d) calculating (32) a page delta corresponding with the page elements (10, 12, 14) to be updated, wherein each page element (10, 12, 14) is associated with a refresh policy depending on the semantics of the respective page element (10, 12, 14);
e) receiving (34) the page delta by the client (17, 18); and
f) merging (40) the page delta with the existing portal page on the client (17, 18).

4. The method of claim 3, wherein the complete portal page is provided on the client (17, 18) by the steps of:
a) sending (20) an initial request for the portal page by the client (17, 18); and
b) receiving (23) the complete portal page by the client (17,
18).

5. The method according to any of the preceding claims, wherein the refresh policy includes conditions defining circumstances, in which the refresh of the respective page element (10, 12, 14) is required or not.

6. The method according to any of the preceding claims, wherein the page delta is provided as a markup document comprising one or more markup elements corresponding to the page elements (10, 12, 14) to be updated.

7. The method of claim 6, wherein the markup document comprises references to unchanged markup elements in the markup document of the existing portal page.

8. The method of claim 6 or 7, wherein the step of identifying (30, 31) the page elements (10, 12, 14) includes for each page element (10, 12, 14) the steps of:
a) checking (54), if the markup element is already on the existing portal page;
b) if yes, requesting (56) and executing the refresh policy of said page element (10, 12, 14); and
c) if a refresh is required (58), writing (60) the markup element of said page element (10, 12, 14) to the markup document of the page delta.

9. The method of claim 8, wherein the step of identifying (30, 31) the page elements (10, 12, 14) includes the further step of:
d) if the refresh is not required (58), returning (62) a reference, which points to the markup element of said page element in the markup document of the existing portal page.

10. The method of claim 8 or 9, wherein the step of identifying (30, 31) the page elements (10, 12, 14) begins with a step of checking (52), if a dynamic refresh is supported.

11. The method according to any of the preceding claims, wherein a cookie is created and transferred along with the portal page or the page delta, respectively.

12. The method claim 11, wherein the cookie is updated during the step of identifying (30, 31) the page elements (10, 12, 14) and transferred along with the created page delta.

13. The method according to any of the preceding claims, wherein the identified page elements (10, 12, 14) are connected to one or more fragments.

14. The method according to claim 13, wherein the markup elements correspond with said fragments.

15. The method according to any of the preceding claims, wherein the page elements (10, 12, 14) are navigation elements (10), layout elements (12) and/or portlets (14).

16. The method according to any of the preceding claims, wherein the portal page has a hierarchical structure of the page elements (10, 12, 14).

17. The method according to claim 16, wherein the portal page has a tree structure of the page elements (10, 12, 14).

18. A system for doing the method according to any of the preceding claims 1 to 17.

19. The system according to claim 18, wherein the system comprises the components:
- a view handler component (100) for controlling the behavior during the step of identifying (30, 31) the page elements (10, 12, 14) to be updated;
- a model transformer component (101) for defining the transform strategy in order to transform a particular resource;
- a user interface mapper component (102) for initializing user interface components; and
- a refresh policy model component (104) for refreshing the portal page.

20. The system according to claim 18 or 19, wherein the system comprises a user interface model component (103) for mapping between a server-side portal page representation and a client-side markup document via identifiers.

21. The system according to any of the claims 18 to 20, wherein the refresh policy model component (104) includes the components:
- a refresh policy holder interface (110) for indicating those user interface components supporting the refresh method;
- a refresh policy interface (111) for modeling refresh policies;
- a base refresh user interface component (112) for implementing the refresh policy holder interface (110); and
- a base refresh renderer (113) for encapsulating the refresh algorithm.

22. The system according to any of the claims 18 to 21, wherein the system is realized in hardware, software or a combination of hardware and software.

23. A computer program product stored on a computer usable medium, comprising computer readable program means for causing a computer to perform a method according to anyone of the preceding claims 1 to 17.
